# EUROPEAN PATENT SPECIFICATION

(11) **EP 3 440 025 B1**
(45) Date of publication and mention of the grant of the patent: **18.01.2023**
(21) Application number: 17722195.9
(22) Date of filing: 07.04.2017
(51) Int. Cl.: C03C 17/42, C08J 7/04, B32B 27/00, B64C 1/14

(54) **OUTBOARD DURABLE TRANSPARENT CONDUCTIVE COATING ON AIRCRAFT CANOPY**
BESTÄNDIGE TRANSPARENTE LEITFÄHIGE AUSSENBESCHICHTUNG AUF FLUGZEUGHAUBEN
REVÊTEMENT CONDUCTEUR TRANSPARENT DURABLE EXTÉRIEUR SUR VERRIÈRE D'AVION

(30) Priority: 08.04.2016 US 201615094714
(43) Date of publication of application: 13.02.2019
(73) Proprietor: PPG Industries Ohio, Inc., Cleveland, OH 44111 (US)
(72) Inventor: UPRETY, Krishna K., Valencia, California 91354 (US); BIMANAND, Alexander, Burbank, California 91502 (US); LAKDAWALA, Khushroo H., Chatsworth, California 91311 (US)
(74) Representative: f & e patent
(86) International application number: PCT/US2017/026650
(87) International publication number: WO 2017/177162

(56) References cited:
- US-A1- 2012 328 859
- US-A1- 2014 093 696
- US-A1- 2014 093 738

## Description

### BACKGROUND

Aircraft canopies such as, for example, stealth aircraft canopies, may include a low resistance (e.g., high electrical conductivity) layer (or layers) to prevent or reduce the buildup of static charge and to provide radar attenuation. Static charge can buildup on a canopy as the result of precipitation static and/or lightning strikes, and may interfere with various functions of the aircraft. By including a low resistance layer (or layers), an aircraft canopy can drain or dissipate static electricity and thereby prevent or reduce the buildup of static charge on the canopy. The low resistance layer (or layers) may be coated with a high resistance topcoat (e.g., a polyurethane antistatic coating), so long as the static charge can be transferred through the organic topcoat into the low resistance layer (or layers).

Modern jet aircraft canopies, such as F-22 stealth fighter canopies, are typically made of polymeric materials. Such materials are utilized because of their light weight, high strength, and ease of shaping. Most polymeric materials, however, do not meet the requirements for stealth aircraft, such as low sheet resistance and the ability to withstand extreme weather conditions. As a result, coatings (e.g., organic and inorganic coatings) are employed to impart high electrical conductivity and other necessary or desired characteristics to the canopy. US 2012/328859, US 2014/093696 and US 2014/093738 describe such coatings.

Typically these coatings include a metal layer, e.g., a silver (Ag), platinum (Pt), palladium (Pd), or tungsten (W) layer, and anti-reflective metal oxide layers, e.g., indium tin oxide (ITO) or titanium dioxide (TiO₂) layers, to impart electrical conductivity and transparency to the coating. Metal layers including silver have been preferred, as such layers exhibit high electrical conductivity and neutral color. However, silver lacks corrosion resistance, and the oxidation of silver to silver oxide reduces the flexibility and light transmission of the metal layer. Because silver is more susceptible to corrosion at higher temperatures, anti-reflective metal oxide coatings typically have been applied to the silver layer at reduced temperatures, which reduces the tensile elongation property of the resulting anti-reflective metallic oxide coating. Additionally, because environmental exposure (e.g., moisture, ultraviolet light, and/or acid rain) may result in the oxidation of silver, coatings including a silver layer often also include one or more organic layers, such as hydrophobic polymers, to protect the silver from environmental exposure. Although the organic layers may reduce the exposure of the silver to moisture, such coatings have exhibited limited service life due to the rapid degradation of the electrical and optical properties of the coating. Additionally, the metal oxide layers, for example the ITO layers, are typically limited to ultra thin layers, which limits the light transmittance of the coating.

### SUMMARY

According to embodiments of the present disclosure, a coated transparency includes: a transparency; a base layer on the transparency, the base layer including at least one selected from an organic compound, an organosilicon compound, and a polysiloxane compound; a metal layer physically contacting the base layer; and a metal oxide layer on the metal layer, the metal oxide layer comprising aluminum doped zinc oxide (AZO)

The metal layer may be substantially free of silver.

The transparency may be selected from the group consisting of an aircraft canopy, an aircraft windshield, and an aircraft window.

The metal oxide layer may have a thickness in a range of about 10 nm to less than 200 nm.

The metal oxide layer may have a thickness in a range of greater than 20 nm to less than 180 nm

The base layer may include a material selected from the group consisting of polyepoxides, polyacrylates, polyurethanes, polysiloxanes, and combinations thereof.

The metal layer may have a thickness in a range of about 5 to about 20 nm.

The coated transparency may further include a tie layer between the transparency and the base layer.

The coated transparency may further include a topcoat on the metal oxide layer.

The topcoat may include polyurethane.

The topcoat may physically contact the metal oxide layer.

In certain embodiments, the coated transparency further includes a topcoat tie layer between the topcoat and the metal oxide layer.

The topcoat tie layer may be electrically conductive.

### BRIEF DESCRIPTION OF THE DRAWINGS

The accompanying drawings, together with the specification, illustrate example embodiments of the present disclosure, and, together with the description, serve to explain the principles of the present disclosure.
FIG. 1 is an exploded, cross-sectional view of a coated transparency including an electrically conductive multilayer stack which is not part of the invention.
FIGS. 2-4 are exploded, cross-sectional views of coated transparencies which are not part of the invention.
FIG. 5 is an exploded, cross-sectional view of a coated transparency according to an embodiment of the present disclosure.
FIG. 6 is a graph showing light transmittance versus wavelength of light for a multilayer stack including AZO/Au/AZO and a multilayer stack including ITO/Ag/ITO.
FIG. 7 is a schematic side view of the arrangement used in the Four Point Bend Test.
FIG. 8 is a schematic top view of a portion of the arrangement used in the Four Point Bend Test.
FIG. 9 is a graph showing the results of the Four Point Bend Test for various multilayer stacks.

### DETAILED DESCRIPTION

In the following description and in the claims, various layers are described as being "positioned over," "disposed over," "located on," or "on" one or more additional layers. This language simply denotes the relative positions of the layers. Thus, in some embodiments, two layers are literally right next to each other, while in other embodiments, the same two layers are separated by one or more additional layer(s). In each case, one of the two layers is considered to be "positioned over," "disposed over," "located on," or "on" the other layer. Also, "over" or "on" can mean "below." For example, a layer that is "over" or "on" another layer can also be considered "below" the other layer, depending upon the point of view.

As used herein throughout the application, including the claims, the term "coated substrate" or "coated transparency" refers to a substrate or +transparency that has been protected (e.g., coated) with one or more layer(s) of metal and/or metal oxide to provide a conductive layer on the substrate. The substrate or transparency can be made of glass or plastic, coated or uncoated, and may form a window or a windshield of a car, aircraft, or boat, a building, or another structure.

According to embodiments of the present disclosure, the AZO metal oxide layers may be formed of about 97 to about 99 at.% ZnO and about 1 to about 3 at.% Al₂O₃. Because AZO metal oxide layers of embodiments of the present disclosure are more flexible than, for example, comparable ITO metal oxide layers, the electrically conductive stack of embodiments of the present disclosure is more flexible, and hence more durable (i.e., has superior mechanical properties), than certain previous multilayer stacks.

An electrically conductive multilayer stack according to certain embodiments of the present disclosure, e.g., an electrically conductive multilayer stack including a metal layer including gold, exhibits better corrosion resistance and durability than certain previous coatings. Because gold is less susceptible to corrosion than certain other metals, such as silver, an electrically conductive multilayer stack including a gold layer is less susceptible to corrosion than certain previous coatings. Consequently, an electrically conductive multilayer stack including a gold metal layer is less likely to suffer from degradation of its electrical (e.g., sheet resistance) and optical properties (e.g., visible light transmittance), resulting in improved durability of a coated transparency including such a multilayer stack. Nonetheless, certain embodiments of the coated transparency of the present disclosure may include one or more additional layer(s), such as those set forth below. For example, in certain embodiments, the coated transparency further includes a topcoat (e.g., a conductive top layer including a conductive metal oxide, a quaternary ammonium salt, an inherently conductive polymer, and/or other suitable conductive agent), a base layer(s) (e.g., a layer including a material selected from the group consisting of polyepoxides, polyacrylates, polyurethanes, polysiloxanes, and combinations thereof), and/or a tie layer(s) (e.g., an acrylic polymer and/or mixture of polymers), such as those described in U.S. Patent Application Publication No. 2010/0025533 and U.S. Patent Application Publication No. 2010/0028684.

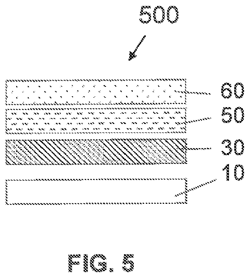

A coated transparency 500 according to an embodiment of the disclosure is shown in FIG. 5. The coated transparency 500 may be, for example, an aircraft canopy, an aircraft windshield, or an aircraft window, but the coated transparency is not limited thereto. As can be seen in the embodiment of FIG. 5, the coated transparency 500 includes a transparency or substrate 10, and a base layer 30 on the transparency or substrate 10, the base layer 30 including at least one selected from an organic compound, an organosilicon compound, and a polysiloxane compound. The coated transparency 500 further includes a metal layer 50 physically contacting the base layer 30. A metal oxide layer 60 is on (e.g., physically contacts) the metal layer 50. The coated transparency 500 may be utilized in situations or instances where the coated transparency may be prepared to have a visible light transmittance and/or a night visibility lower than those of a coated transparency in which the metal layer physically contacts two metal oxide layers. For example, in some embodiments, the coated transparency may have a visible light transmittance of 60 to 70% (e.g., 60 to less than 70%, 60 to 69%, 60 to 68%, 60 to 65%, 62 to 70%, 62 to less than 70%, 62 to 69%, or 62 to 68%) and/or the coated transparency may have a night visibility or NVIS of 50 to 65% (e.g., 50 to less than 65%, 50 to 60%, or 50 to less than 60%), and thus, the metal layer may physically contact the base layer 30 rather than physically contacting two metal oxide layers to provide improved anti-reflective properties.

In some embodiments, when the metal layer (e.g., a metal layer comprising, consisting essentially of, or consisting of gold) physically contacts the base layer and is suitable for de-fogging and/or de-icing (e.g., has a thickness that provides a sheet resistance of 6 to 8 Ω/□ at a power level of 5 watts/square inch at 220 volts) the metal layer may have a visible light transmittance of about 60 to 62% and a night visibility of about 50%. The metal layer may have dual functionality: the metal layer may be used as a heater film, the metal layer may be used to provide electromagnetic interference (EMI) shielding, or the metal layer may be used both as a heater film and to provide EMI shielding. In some embodiments, the transparency may provide an EMI shielding effectiveness value (S.E.) of > 10 dB such as, for example, 10 dB to 40 dB (e.g., 10 dB to 30 dB, 20 dB to 40 dB, or 20 dB to 30 dB) at a frequency of 1 GHz to 25 GHz (e.g., 1 GHz to 20 GHz). In some embodiments, the transparency may provide an EMI shielding effectiveness (S.E.) of > 10 dB such as, for example, 10 dB to 90 dB (e.g., 10 dB to 85 dB, 10 dB to 80 dB, or 10 dB to 75 dB) at a frequency of 1 kHz to 1 GHz or at a frequency of 1 GHz to 20 GHz. When the transparency further includes the metal oxide layer on (e.g., physically contacting) the metal layer, the visible light transmittance improves from about 60% to 62% to about 68 to 70% and the night visibility improves from about 50% to about 60%. Having the metal layer physically contact the base layer, rather than having a metal oxide layer between the metal layer and the base layer, simplifies the production of the coated transparency and/or reduces the cost of producing the coated transparency. Additionally, when a metal oxide layer is included between the metal layer and the base layer, the metal oxide layer may contaminate the metal layer (e.g., as a result of the sputtering of the first metal oxide layer), and thus, having the metal layer physically contact the base layer reduces the contamination of the metal layer.

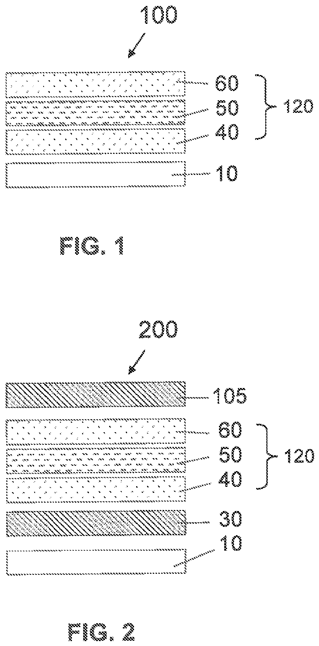

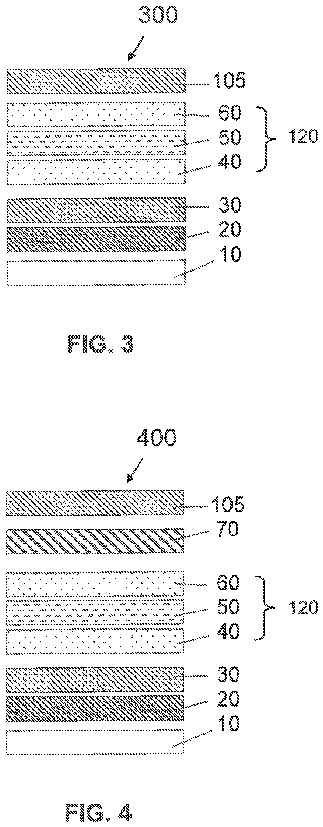

The transparency or substrate 10, base layer 30, metal layer 50, and metal oxide layer may be the same (e.g., substantially the same) as the transparency or substrate, base layer, metal layer, and first and/or second metal oxide layers, respectively, as described with respect to FIGS. 1-4. For example, the base layer 30 may be selected to adhere well to the transparency or substrate 10. The base layer 30 may cover the imperfections of the transparency or substrate and promote adhesion of the metal layer to the transparency or substrate. The base layer should be hard enough to support the metal layer, and the base layer should not adversely affect the impact resistance of the coated transparency. A soft tie coat may be positioned between the base layer and the transparency or substrate. As used herein throughout the application, including the claims, the term "soft tie coat" refers to a tie coat capable of dissipating the shrinkage stress that results from the addition of the other layers (e.g., the base layer, the metal layer, and/or the metal oxide layer), and/or capable of accommodating the dimensional change of the transparency or substrate due to extreme thermal exposure.

In one embodiment of the disclosure, the base layer 30 comprises a material selected from the group consisting of polyepoxides, polyacrylates, polyurethanes, polysiloxanes, and combinations thereof. A polysiloxane base layer may be particularly useful as a result of its inorganic composition and hardness. As such, the base layer 30 may include a polymeric and/or oligomeric silane, among other species. For example, a coating composition may be prepared from a combination of monomeric silanes and silane terminated polymers that are hydrolyzed in a mixture of water and acid to form silanols, which are condensed to a precondensate state after being formed. When the coating composition is applied to a surface and cured, the precondensate, which includes the silanols, reacts to form siloxane linkages, thereby forming an example polysiloxane base layer 30. The base layer 30 may include any suitable polyepoxide, polyacrylate, and/or polyurethane. For example, the base layer 30 may include a thermally-curable polyacrylate coated with the above-described polysiloxane. In certain embodiments, the metal layer 50 is substantially free of silver (Ag). In certain embodiments, the metal layer 50 is completely free of silver.

The following examples are presented for illustrative purposes only and are not to be viewed as limiting the scope of the present disclosure. Unless otherwise indicated, all parts and percentages in the following examples, as well as throughout the specification, are by weight.

### Reference example 1 which is not part of the invention:

A polycarbonate coupon was prepared and then lightly abraded to increase its surface roughness and surface area for receiving a primer (3-aminopropyltriethoxy silane, an adhesion promoter). The primer was gravity coated onto the coupon. Next, a polymeric solution (FX-430, produced by PPG Industries, Inc.,) was applied to the coupon by flow coating. The polymeric solution was poured from the top of the coupon and from one end to another, allowing the solution to flow down and coat the coupon by gravity flow. Excess polymeric solution was allowed to flow down into a dripping pan and was collected for proper disposal.

After the entire outer surface of the coupon has been coated, it was cured in a heated oven at about 230 °F for about 5 hours. After the coating was cured, the coupon was abraded to increase its surface area for receiving the next coating layer and then cleaned with Isopropanol (IPA). A silane basecoat was then applied by flow coating, followed by a layer of a base coat (FX-419, produced by PPG Industries, Inc.). The coated coupon was then cured in a preheated oven at a temperature of about 190 °F for about 2 hours. After curing, the coupon was thoroughly cleaned to remove dust particles and particulates that may have accumulated on the surface.

The cleaned coupon was then placed in a vacuum chamber. The pressure in the vacuum chamber was reduced and the substrate in the chamber was heated to about 100 to about 200 °F. Two metal oxide layers and one metal layer were deposited on the coated coupon at an elevated temperature (e.g., about 100 to about 200 °F) using magnetron sputtering. First, a layer of AZO was formed, and then a gold layer was deposited onto the coupon at the same temperature. After a layer of gold was formed, a second layer of AZO was deposited on top of the gold layer at a temperature of about 100 to about 200 °F. The coupon was then removed from the chamber and then cleaned to remove any contaminants that might have adhered to the surface.

A topcoat (FX-446, produced by PPG Industries, Inc.) was then applied to the second metal oxide layer (i.e., second AZO layer) and cured. The following test procedures were then performed on the coated transparency of Example 1.

### Haze and Luminous Transmittance Tests

A 3 inch by 12 inch coupon prepared according to Example 1 was tested according to ASTM D1003 using a Haze-Gard Plus instrument. Haze measures the clearness and transparency of the film (the film should not be translucent and diffuse light), while the luminous or visible light transmittance indicates the amount of visible light transmitted through the sample. The coupon exhibited a visible light transmittance of 65-75% and a haze of 0.25-1%. According to the test results, the coupon meets the visible light transmittance and haze values required for aircraft canopy, windshield and windows, which are 65% or above and 10% or below, respectively.

### Cross-Hatch Adhesion

A 3 inch by 12 inch coupon prepared according to Example was tested for cross-hatch adhesion according to ASTM D3359. The coating exhibited 100% adhesion to the substrate.

### Humidity Test

A 3 inch by 12 inch coupon prepared according to Example 1 was exposed to 100% condensing humidity at 122 °F (50 °C) for 336 hours (2 weeks), and then subjected to the cross-hatch adhesive test according to ASTM D3359. Prior to the humidity test, the coupon exhibited a visible light transmittance of 71-73% and haze of 0.5-2%, as determined by the above-described haze and luminous transmittance test. After the humidity test, the coupon exhibited a visible light transmittance of 69-72% and haze of 1-2.5%, as determined by the above-described haze and luminous transmittance test. The cross-hatch adhesive test revealed 100% adhesion of the coating to the substrate. According to the test results, the coupon exposed to the humidity test did not degrade or lose adhesion, and the humidity test did not significantly alter the visible light transmittance or haze of the coupon.

### Humidity and Solar Radiation (QUV) Test

A 3 inch by 12 inch coupon prepared according to Example 1 was exposed to ultraviolet (UV) radiation for 8 hours at 158 °F (70 °C). The coupon was then exposed to condensation for 4 hours at 122 °F (50 °C). The cycles were repeated for a total of 336 hours (2 weeks). The coupon was then subjected to the cross-hatch adhesive test according to ASTM D3359. Prior to the QUV test, the coupon exhibited a visible light transmittance of 71 - 73% and haze of 0.5-2%, as determined by the above-described haze and luminous transmittance test. After the QUV test, the coupon exhibited a visible light transmittance of 70-72% and haze of 1-2.5%, as determined by the above-described haze and luminous transmittance test. The cross-hatch adhesive test revealed 100% adhesion of the coating to the substrate. According to the test results, the coupon exposed to the QUV test did not degrade or lose adhesion, and the QUV test did not significantly alter the visible light transmittance or haze of the coupon.

### Steam Test

A 2 inch by 2 inch coupon prepared according to Example 1 was placed just above boiling water for 6 hours in an enclosed chamber. The coupon was then subjected to the cross-hatch adhesive test according to ASTM D3359. Prior to the steam test, the coupon exhibited a visible light transmittance of 69-73% and haze of 0.5-1%, as determined by the above-described haze and luminous transmittance test. After the steam test, the coupon exhibited a visible light transmittance of 68-72% and haze of 1-2.5%, as determined by the above-described haze and luminous transmittance test. The cross-hatch adhesive test revealed 100% adhesion of the coating to the substrate. According to the test results, the coupon exposed to the steam test for 6 hours did not degrade or lose adhesion, and the accelerated steam test did not significantly alter the visible light transmittance or haze of the coupon.

### Bayer Abrasion Test

The abrasion resistance of a 2 inch by 2 inch coupon prepared according to Example 1 was tested according to ASTM F735 for 600 cycles. Prior to the Bayer abrasion test, the coupon exhibited a visible light transmittance of 69-73% and haze of 0.5-1%, as determined by the above-described haze and luminous transmittance test. After the abrasion test, the coupon exhibited a visible light transmittance of 68-72% and haze of 1-2.5%, as determined by the above-described haze and luminous transmittance test. According to the test results, the visible light transmittance and haze of the coupon were not significantly altered by the Bayer abrasion test.

### Rain Erosion Test

Several 1 inch by 1 inch coupons prepared according to Example 1 were exposed to simulated rainfall at the University of Dayton Research Institute (UDRI). In one test, a coupon was exposed to 1.0 inches/hour of simulated rainfall at a wind speed of 350 miles per hour (mph). After 11 minutes of exposure to the simulated rainfall, the coupon was visually inspected, and then the rain erosion test was repeated for a total test duration of 88 minutes, with visual inspection performed every 11 minutes. The preceding test was repeated, with visual inspection performed every 11 minutes, using a coupon that had previously been subjected to the QUV test. In yet another test, a coupon was exposed to 1.0 inches/hour of simulated rainfall at a wind speed of 550 mph for a duration of 22 minutes, with visual inspection performed every 11 minutes. In each of the tests, the coupon was inclined at an angle of 30 degrees to the direction of the wind. Excluding the trailing edges, the coupons exposed to the 350 mph and 550 mph simulated rainfall did not degrade beyond the allowable tolerance of having 90% of the coating remain after exposure to the simulated rainfall. That is, after the rain erosion test, less than 10% of the coating had been removed from the coupons, excluding the trailing edges of the coupons.

### Salt Spray (Salt Fog/SO₂) Test

Two 2 inch by 12 inch coupons prepared according to Example 1 were tested in accordance with ASTM G85 annex A4. The coupons were inclined at an angle of 30 degrees from vertical and exposed to a salt/sulfur dioxide (SO₂) fog for 168 hours (1 week). The salt fog/SO₂ tests were performed at NTS in Santa Clarita. Prior to the salt fog/SO₂ test, the coupons exhibited a visible light transmittance of 68-72% and haze of 0.25-1%, as determined by the above-described haze and luminous transmittance test. After the salt fog/SO₂ test, the coupons exhibited a visible light transmittance of 66-70% and haze of 1-2%, as determined by the above-described haze and luminous transmittance test. Subsequent to the salt fog/SO₂ tests, the coupons were subjected to the cross-hatch adhesive test according to ASTM D3359. The cross-hatch adhesive tests revealed 100% adhesion of the coating to the substrate. According to the test results, the coupons exposed to the salt fog/SO₂ test for 168 hours did not degrade or lose adhesion, and the salt fog/SO₂ test did not significantly alter the visible light transmittance or haze of the coupons.

### Precipitation Static (P-Static) Test

To test the ability of the multilayer stack to migrate an electrical charge without degradation, a 3 inch by 12 inch coupon prepared according to Example 1 was subjected to a current density of 0.347 µA/in² (50 µA/ft²) at -40 °F (-40 °C) for 4 hours. Visual inspection of the coupon after testing showed no visible burns or degradation of the surface of the coating. The multilayer stack of the coating did not discharge during any of the test blocks and no major fluctuations of current occurred during testing.

### Sheet Resistance Test

The sheet resistance of a 3 inch by 12 inch coupon prepared according to Example 1 was tested using a four point probes surface resistivity meter from Guardian Manufacturing Inc. The sheet resistance of the Au was determined to be 5-20 ohms per square (Ω/□).

Certain of the above-described test results for the coated transparency of Example 1 are summarized below in Tables 1 and 2.

**Table 1.**

| **Test** | **Visible Light Transmittance** | **Haze** | **Cross-Hatch Adhesion** |
|---|---|---|---|
| **No Test (Untreated) (3" × 12" coupon)** | 65-75% | 0.25-1% | 100% adhesion |
| **Humidity (3" × 12" coupon)** | Before: 71-73% | Before: 0.5-2% | Before: 100% adhesion |
| | After: 69-72% | After: 1-2.5% | |
| | | | After: 100% adhesion |
| **QUV (3" × 12" coupon)** | Before: 71-73% | Before: 0.5-2% | Before: 100% adhesion |
| | After: 70-72% | After: 1-2.5% | |
| | | | After: 100% adhesion |
| **Accelerated Steam (2"** × **2" coupon)** | Before: 69-73% | Before: 0.5-1% | Before: 100% adhesion |
| | After: 68-72% | After: 1-2.5% | |
| | | | After: 100% adhesion |
| **Bayer Abrasion (2"** × **2" coupon)** | Before: 69-73% | Before: 0.5-% | Before: 100% adhesion |
| | After: 68-72% | After: 1-2.5% | |
| | | | After: N/A |
| **Salt** Fog/SO₂ **(2" × 12" coupon)** | Before: 68-72% | Before: 0.25-1% | Before: N/A |
| | After: 66-70% | After: 1-2% | After: 100% adhesion |

**Table 2.**

| **Test** | **Result** |
|---|---|
| **Humidity** | Two weeks of exposure did not significantly alter the condition, adhesion, visible light transmittance or haze of the coupon |
| **QUV** | Two weeks of exposure did not significantly alter the condition, adhesion, visible light transmittance or haze of the coupon |
| **Bayer Abrasion** | The abrasion test did not significantly alter the visible light transmission or haze of the coupon |
| **Rain Erosion** | 350 mph for 88 min: 100% |
| | 350 mph for 88 min (QUV exposed coupon): 100% |
| | 550 mph for 22 min: 100% |
| **Salt fog/SO₂** | One week of exposure did not significantly alter the condition, adhesion, visible light transmittance or haze of the coupon |
| **P-Static** | Passed 50 µA/ft² at -40 °C (no discharge or major fluctuations of current during test; no visible burns or degradation observed after test) |
| **Humidity** | 2 weeks - No Damage |
| **QUV** | 2 weeks - No Damage |
| **Rain Erosion** | 350 mph for 88 min: 100% |
| | 350 mph for 88 min (QUV exposed coupon): 100% |
| | 550 mph for 22 min: 100% |
| **Sheet Resistance of Au** | 5-20 Ω/□ |

### Comparative Example 1 - ITO/Au/ITO

A first ITO layer was prepared using a pulsed DC magnetron sputtering system in an Ar and O₂ gas mixture at a temperature of about 100 to about 200 °F. An ITO ceramic target including about 90 at.% In₂O₃ and 10 at.% Sn₂O₄ was used. A gold layer was deposited on the first ITO layer using a DC magnetron sputtering system at a temperature of about 100 to about 200 °F using an Ar gas atmosphere. A second ITO layer was formed over the gold layer using a pulsed DC magnetron sputtering system in an Ar and O₂ gas mixture at a temperature of about 100 to about 200 °F.

### Comparative Example 2 - ITO/Ag/ITO

A first ITO layer was prepared using a pulsed DC magnetron sputtering system in an Ar and O₂ gas mixture at a temperature of about 100 to about 200 °F. An ITO ceramic target including about 90 at.% In₂O₃ and 10 at.% Sn₂O₄ was used. A silver layer was deposited on the first ITO layer using a DC magnetron sputtering system at room temperature using an Ar gas atmosphere. A second ITO layer was formed over the silver layer using a pulsed DC magnetron sputtering system in an Ar and O₂ gas mixture at room temperature.

Coupons prepared according to Comparative Examples 1 and 2 were punctured to expose the metallic layer of the coating, and subjected to the above-described Salt Fog/SO₂ test. The coupon including a silver layer (i.e., the coupon according to Comparative Example 2) exhibited a circular bluish defect having a diameter of about one inch, which indicated corrosion of the silver layer. The coupon including a gold layer did not did not exhibit any signs of corrosion. When exposed to the above-described humidity, QUV, and steam tests, coupons according to Comparative Example 2 exhibited occasional signs of corrosion. The humidity, QUV and steam tests had no effect on the coupons prepared according to Comparative Example 1. Coupons according to Comparative Examples 1 and 2 exhibited similar results for the Bayer abrasion test, as the coupons included identical topcoats.

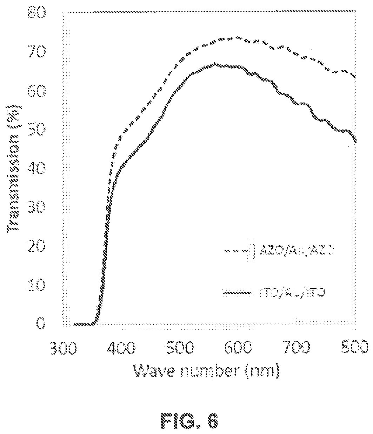

FIG. 6 is a graph showing light transmittance versus wavelength of light of a multilayer AZO/Au/AZO stack presented in this patent and for the multilayer stack of Comparative Example 1, which includes an ITO/Au/ITO stack. As can be seen in FIG. 6, the multilayer stack including AZO/Au/AZO exhibits enhanced light transmittance in the visible light region (e.g., about 390 to about 750 nm) as compared to the light transmittance of the comparative multilayer stack consisting of ITO/Au/ITO.

### Four Point Bend Test

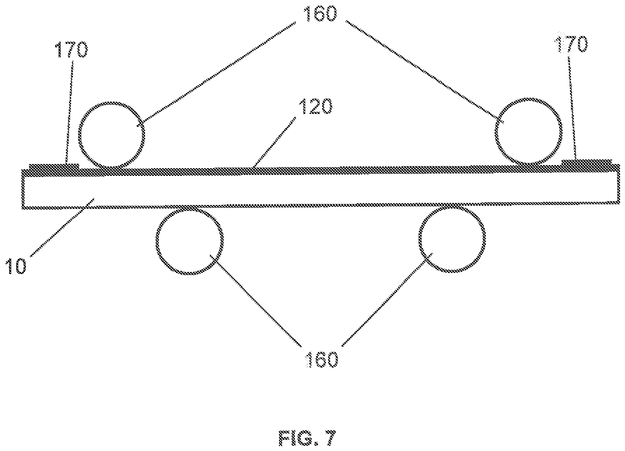

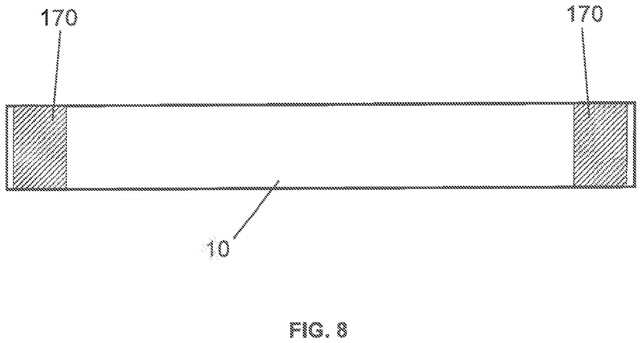

Multilayer stacks prepared according to Example 1, Comparative Example 1, and Comparative Example 2 were subjected to the four point bend test to measure the change in electrical resistance (ΔR/R) for each multilayer stack as a function of the uniaxial tensile elongation of the multilayer stack. For example, a coupon according to Example 1 was prepared for the four point bend test as follows. A first basecoat was applied on a substrate 10 (i.e., a transparency) 2 inches wide, 12 inches in length, and 0.75 inches thick. Then, an electrically conductive multilayer stack 120 including AZO/Au/AZO was deposited on the substrate 10 in a vacuum chamber. A conductive tape (one inch wide) was then vertically applied over the electrically conductive multilayer stack to provide application sites for the bus-bars 170, as shown in FIGS. 7-8. The remaining portion of the electrically conductive multilayer stack (8.5 inches in length) was coated with a primer and a topcoat. No organic coating was applied over the conductive tape. Two flexible metallic conductive bus-bars 170 were applied over the conductive tape as shown in FIGS. 7-8, and the bus-bus resistance of the coupon was recorded.

Next, a strain gauge resistor obtained from Vishay measurement was mounted on the center section of the substrate, on the side opposite to the bus-bars. The strain gauge was used to determine the tensile elongation (flexibility) of the coating layers. A tensile load was applied to the substrate using a united tensile testing system. Four bending bars 160, shown in FIG. 7, applied the tensile load. The bending bars 160 on the side opposite to the bus-bars were spaced about 4 inches apart. The electrical bus-bus resistance was monitored throughout the test. If the resistance of the substrate exceeded 20% above the original value, the tensile strain of the coupon was recorded. The four point bend test was then repeated, as described-above, for coupons prepared according to Comparative Example 1 (i.e., a coupon including an ITO/Au/ITO stack) and Comparative Example 2 (i.e., a coupon including an ITO/Ag/ITO stack).

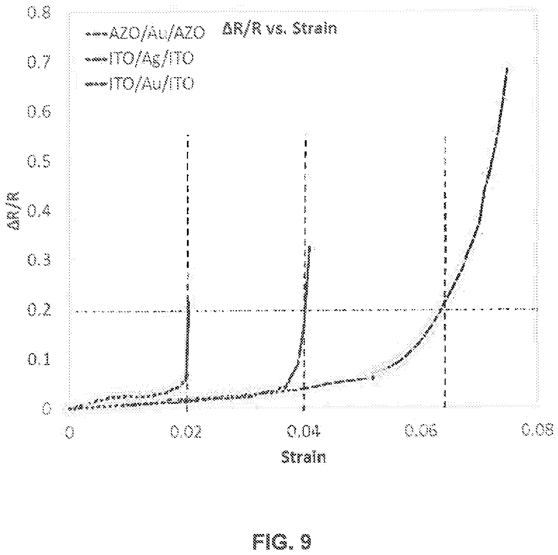

The results of the above-described four point bend test are shown in FIG. 9, which is a graph of the change in electrical resistance (ΔR/R) versus strain for the multilayer stacks prepared according to Example 1 (labeled as "AZO/Au/AZO"), Comparative Example 1 (labeled as "ITO/Au/ITO") and Comparative Example 2 (labeled as "ITO/Ag/ITO"). A summary of the results of the four point bend test is also shown below in Table 3.

**Table 3.**

| **Sample** | **Four Point Bend Test Results: Uniaxial Tensile Elongation (%)** |
|---|---|
| Example 1 (2" × 12" coupon) | about 6.4% |
| Comparative Example 1 (2" × 12" coupon) | about 4% |
| Comparative Example 2 (2" × 12" coupon) | about 2% |

As can be seen in FIG. 9 and Table 3, Example 1 performed substantially better in the four point bend test than either Comparative 1 or Comparative Example 2. Specifically, according to the above-described four point bend test, Example 1, which includes an AZO/Au/AZO multilayer stack according to an example embodiment of the present disclosure, exhibited a greater than 50% increase in uniaxial tensile elongation over Comparative Example 1, which includes an ITO/Au/ITO multilayer stack. That is, Example 1 exhibited about 6.4% uniaxial tensile elongation, while Comparative Example 1 exhibited about 4% uniaxial tensile elongation. Additionally, according to the above-described four point bend test, Example 1 exhibited a greater than 200% increase in uniaxial tensile elongation over Comparative Example 2, which includes an ITO/Ag/ITO multilayer stack. That is, Example 1 exhibited about 6.4% uniaxial tensile elongation, while Comparative Example 2 exhibited about 2% uniaxial tensile elongation. Accordingly, an example embodiment of the present disclosure performed substantially better in the above-described four point bend test than Comparative Examples 1 and 2.

Although various embodiments of the disclosure have been described, additional modifications and variations will be apparent to those skilled in the art. For example, the coated transparency can have additional tie layers or primers, conductive tie layer, alternate thicknesses, additional components, etc. Also, as the individual layers that comprise the coated transparency are formed, they can be cleaned before the next adjacent layer is deposited. For example, the canopy can be cleaned with a solvent such as acetone, and then dried to remove any surface water, which could cause premature crosslinking of the polysiloxane of the base layer 30.

## Claims

1. A coated transparency comprising:
a transparency;
a base layer on the transparency, the base layer comprising at least one selected from an organic compound, an organosilicon compound, and a polysiloxane compound;
a metal layer physically contacting the base layer; and
a metal oxide layer on the metal layer, the metal oxide layer comprising aluminum doped zinc oxide (AZO).

2. The coated transparency of claim 1, wherein the metal layer is substantially free of silver.

3. The coated transparency of claim 1, wherein the transparency is selected from the group consisting of an aircraft canopy, an aircraft windshield, and an aircraft window.

4. The coated transparency of claim 1, wherein the metal oxide layer has a thickness in a range of about 10 nm to less than 200 nm.

5. The coated transparency of claim 1, wherein the metal oxide layer has a thickness in a range of greater than 20 nm to less than 180 nm.

6. The coated transparency of claim 1, wherein the base layer comprises a material selected from the group consisting of polyepoxides, polyacrylates, polyurethanes, polysiloxanes, and combinations thereof.

7. The coated transparency of claim 1, wherein the metal layer has a thickness in a range of about 5 to about 20 nm.

8. The coated transparency of claim 1, further comprising a tie layer between the transparency and the base layer.

9. The coated transparency of claim 1, further comprising a topcoat on the metal oxide layer.

10. The coated transparency of claim 9, wherein the topcoat comprises polyurethane.

11. The coated transparency of claim 9, wherein the topcoat physically contacts the metal oxide layer.

12. The coated transparency of claim 9, further comprising a topcoat tie layer between the topcoat and the metal oxide layer.

13. The coated transparency of claim 12, wherein the topcoat tie layer is electrically conductive.

## Patentansprüche

1. Ein beschichteter lichtdurchlässiger Gegenstand umfassend:
einen lichtdurchlässigen Gegenstand,
eine Grundschicht auf dem lichtdurchlässigen Gegenstand, die Grundschicht umfassend wenigstens eine ausgewählt aus einer organischen Verbindung, einer Organosiliciumverbindung und einer Polysiloxanverbindung,
eine Metallschicht, welche in physischem Kontakt mit der Grundschicht steht, und
eine Metalloxidschicht auf der Metallschicht, die Metalloxidschicht umfassend Aluminium-dotiertes Zinkoxid (AZO).

2. Der beschichtete lichtdurchlässige Gegenstand des Anspruchs 1, wobei die Metallschicht im Wesentlichen frei von Silber ist.

3. Der beschichtete lichtdurchlässige Gegenstand des Anspruchs 1, wobei der lichtdurchlässige Gegenstand aus der Gruppe bestehend aus einem Flugzeugkabinendach, einer Flugzeugwindschutzscheibe und einem Flugzeugfenster ausgewählt ist.

4. Der beschichtete lichtdurchlässige Gegenstand des Anspruchs 1, wobei die Metalloxidschicht eine Dicke im Bereich von ungefähr 10 nm bis weniger als 200 nm aufweist.

5. Der beschichtete lichtdurchlässige Gegenstand des Anspruchs 1, wobei die Metalloxidschicht eine Dicke im Bereich von größer als 20 nm bis weniger als 180 nm aufweist.

6. Der beschichtete lichtdurchlässige Gegenstand des Anspruchs 1, wobei die Grundschicht ein Material ausgewählt aus der Gruppe bestehend aus Polyepoxiden, Polyacrylaten, Polyurethanen, Polysiloxanen und Kombinationen davon umfasst.

7. Der beschichtete lichtdurchlässige Gegenstand des Anspruchs 1, wobei die Metallschicht eine Dicke im Bereich von ungefähr 5 bis ungefähr 20 nm aufweist.

8. Der beschichtete lichtdurchlässige Gegenstand des Anspruchs 1, des Weiteren umfassend eine Verbindungsschicht zwischen dem lichtdurchlässigen Gegenstand und der Grundschicht.

9. Der beschichtete lichtdurchlässige Gegenstand des Anspruchs 1, des Weiteren umfassend eine Deckschicht über der Metalloxidschicht.

10. Der beschichtete lichtdurchlässige Gegenstand des Anspruchs 9, wobei die Deckschicht Polyurethan umfasst.

11. Der beschichtete lichtdurchlässige Gegenstand des Anspruchs 9, wobei die Deckschicht in physischem Kontakt mit der Metalloxidschicht steht.

12. Der beschichtete lichtdurchlässige Gegenstand des Anspruchs 9, des Weiteren umfassend eine Deckschichtverbindungsschicht zwischen der Deckschicht und der Metalloxidschicht.

13. Der beschichtete lichtdurchlässige Gegenstand des Anspruchs 12, wobei die Deckschichtverbindungsschicht elektrisch leitfähig ist.

## Revendications

1. Article transparent revêtu, comprenant :
- un article transparent,
- une couche de base sur l'article transparent, laquelle couche de base comprend au moins un composé choisi parmi un composé organique, un composé organo-silicique, et un composé polysiloxane,
- une couche de métal, en contact physique avec la couche de base,
- et une couche d'oxyde de métal par-dessus la couche de métal, laquelle couche d'oxyde de métal comprend de l'oxyde de zinc dopé à l'aluminium (OZA).

2. Article transparent revêtu, conforme à la revendication 1, dans lequel la couche de métal est pratiquement exempte d'argent.

3. Article transparent revêtu, conforme à la revendication 1, lequel article transparent est choisi dans l'ensemble comprenant une verrière d'aéronef, un pare-brise d'aéronef et une fenêtre d'aéronef.

4. Article transparent revêtu, conforme à la revendication 1, dans lequel la couche d'oxyde de métal présente une épaisseur située dans un intervalle allant d'environ 10 nm à moins de 200 nm.

5. Article transparent revêtu, conforme à la revendication 1, dans lequel la couche d'oxyde de métal présente une épaisseur située dans un intervalle allant de plus de 20 nm à moins de 180 nm.

6. Article transparent revêtu, conforme à la revendication 1, dans lequel la couche de base comprend un matériau choisi dans l'ensemble constitué par les polyépoxydes, les polyacrylates, les polyuréthanes, les polysiloxanes et leurs combinaisons.

7. Article transparent revêtu, conforme à la revendication 1, dans lequel la couche de métal présente une épaisseur située dans l'intervalle allant d'environ 5 à environ 20 nm.

8. Article transparent revêtu, conforme à la revendication 1, comprenant en outre une couche de liaison entre l'article transparent et la couche de base.

9. Article transparent revêtu, conforme à la revendication 1, comprenant en outre une couche de dessus par-dessus la couche d'oxyde de métal.

10. Article transparent revêtu, conforme à la revendication 9, dans lequel la couche de dessus comprend un polyuréthane.

11. Article transparent revêtu, conforme à la revendication 9, dans lequel la couche de dessus est en contact physique avec la couche d'oxyde de métal.

12. Article transparent revêtu, conforme à la revendication 9, comprenant en outre une couche de liaison pour couche de dessus, entre la couche de dessus et la couche d'oxyde de métal.

13. Article transparent revêtu, conforme à la revendication 12, dans lequel la couche de liaison pour couche de dessus est électro-conductrice.
